# EUROPÄISCHE PATENTSCHRIFT

(11) **EP 2 080 946 B1**
(45) Veröffentlichungstag und Bekanntmachung des Hinweises auf die Patenterteilung: **10.11.2010**
(21) Anmeldenummer: 09000473.0
(22) Anmeldetag: 15.01.2009
(51) Int. Cl.: F16L 55/165, F16L 55/179

(54) **Kunststoffrohr zur Sanierung von Abwasserleitungen**
Plastic pipe for renovating of sewage conduits
Tuyau en matière plastique destiné à rénover des conduites d'eaux usées

(30) Priorität: 18.01.2008 DE 202008000821 U
(43) Veröffentlichungstag der Anmeldung: 22.07.2009
(73) Patentinhaber: Rehau AG + Co, 95111 Rehau (DE)
(72) Erfinder: Krause, Frank, 91301 Forchheim (DE); Schmutzler, Wolfgang, 95234 Sparneck (DE)

(56) Entgegenhaltungen:
- EP-A- 0 805 301
- EP-A- 1 443 257
- DE-A1- 19 602 751
- DE-A1- 19 723 721
- US-A- 3 132 062
- US-A- 5 205 886
- US-A1- 2003 116 211
- US-A1- 2005 048 239

## Beschreibung

Die Erfindung betrifft ein Kunststoffrohr zur Sanierung von Abwasserleitungen, wobei das Rohr querschnittsreduzierend verformbar ist, um in eine zu sanierende Abwasserleitung eingebracht zu werden, und anschließend rückverformbar ist, um sich von innen gegen die zu sanierende Abwasserleitung zu legen.

Derartige Rohre sind beispielsweise aus der DE 100 39 059 A1 oder US 5,487,411 bekannt. Die Rohre bestehen beispielsweise aus Polyethylen (PE) oder Polyvinylchlorid (PVC).

Die Rohre aus handelsüblichem Polyethylen besitzen eine hohe Dehnfähigkeit für das Falten, Verlegen und Rückverformen. Im Hausanschlussbereich werden die Rohre mit einer speziellen Schweißtechnik abgedichtet. Dies ist maschinell sehr aufwändig und teuer. Die in der Praxis montierten Hausanschlussanbindungen sind nicht zuverlässig dicht.

Polyethylen-Rohre weisen im Allgemeinen eine unpolare hydrophobe Oberfläche auf und sind nicht klebfähig.

Andere Rohre werden aus klebfähigem PVC hergestellt. Mit den im Markt eingesetzten Klebetechniken werden dichte Hausanschlüsse erreicht. Nachteilig an dem PVC-Rohr im Vergleich zum PE-Rohr ist das teurere Material und die geringere Dehnfähigkeit des Materials während der Verlegung. Spannungen während des Verlegens bei lokal unterschiedlichen Abkühlbedingungen können zum Reißen der Rohre in Umfangsrichtung führen.

Die US-A-3 132 062 offenbart Kunststoffrohre zur Sanierung von Abwasserleitungen mit einem klebfähigen Material auf der Oberfläche zur Befestigung an der Innenseite des Abwasserrohrs. Die EP-A-1 443 257 beschreibt eine Auskleidung mit klebfähiger Innenschicht, die durch Umstülpen an der zu sanierenden Leitung befestigbar ist. In der US-A-5 205 886 werden per klebfähiger Innenschicht mehre ineinandergesteckte Rohre miteinander verbunden und an der Innenseite der Leitung befestigt. Die US 2003/0116211 A1 beschreibt das Abdichten einer Kanalwandung im Bereich eines Nebenkanals mittels eines Haftmittelträgers, der gesondert auf dem Hutprofil aufzubringen ist. Analog dazu beschreibt die DE 197 23 721 A1 ein Abdichten einer Kanalwandung im Bereich eines Nebenkanals mittels Inliners durch Befestigen eines Ringscheibenbereichs des Hutprofils am Inliner per Verklebung. Die EP-A-0 805 301 legt ein Einsatzteil zum Sanieren undichter Leitungswände offen, das eine flüssigkeitsdichte Verbindung zwischen einem Kunststoffinliner innerhalb eines Kanals im Bereich einer Abzweigung und eines Laminats bereitstellt, dass einen Spalt abdeckt.

Die DE 196 02 751 A1 offenbart ein Kunststoffrohr mit den Merkmalen des Oberbegriffs des Hauptanspruchs, wobei eine innenliegende Schicht aus einem Ethylen-Copolymer mit einem Vinylacetat-Anteil von 12 Gew.% aufgeführt ist, die eine verbesserte Verbundhaftung mit koextrudierten Schichten bereitstellt. Die US 2005/048239 A1 offenbart ebenfalls gattungsgemäße Kunststoffrohre aus einer Mischung von Polyamiden und damit nicht mischbaren Fluorpolymeren, die eine koextrudierte, klebfähige Innenschicht bereitstellen und deren Innenschicht mit Carbonsäureester modifiziert ist.

Der Erfindung liegt die Aufgabe zugrunde, das gattungsgemäße Rohr dahingehend weiterzuentwickeln, dass es kostengünstig herstellbar und an Abzweigungen wirtschaftlich abdichtbar ist.

Zur Lösung dieser Aufgabe stellt die Erfindung das Kunststoffrohr für die Sanierung von Abwassedeitungen gemäß Anspruch 1 bereit.

Demnach besteht das erfindungsgemäße Kunststoffrohr im Wesentlichen aus einem besonders kostengünstigen und dehnfähigen Kunststoffmaterial und wird nur lokal, d.h. an der gegenüber Abzweigungen abzudichtenden Innenseite behandelt, um die Klebfähigkeit zu erhöhen. Die Klebeabschnitte können auf verschiedene Wege bewerkstelligt werden, wobei im Rahmen der Erfindung ein klebfähiges Koextrudat als Innenschicht in Betracht gezogen wird. Das erfindungsgemäße Kunststoffrohr vereint die positiven Eigenschaften eines dehnfähigen Materials und eines klebfähigen Materials in sich. Demnach ist das erfindungsgemäße Kunststoffrohr sowohl kostengünstiger herstellbar als auch an Abzweigungen wirtschaftlicher abdichtbar als herkömmliche Kunststoffrohre.

Vorteilhafte Weiterbildungen der Erfindung werden in den Unteransprüchen beansprucht.

Eine weitere bevorzugte Ausführung der Erfindung betrifft ein Kunststoffrohr nach der vorangegangenen Ausführung, wobei das Rohr als Polyethylenrohr ausgebildet ist oder zumindest an seiner innenseite im Wesentlichen aus Polyethylen besteht. Eingeschlossen ist damit ein Mehrschichtrohr und ein vor Ort aushärtendes Rohr aus Schlauchmaterial mit einer Polyethylen-Innenschicht, auf der eine Klebung erfolgen soll. Diese Maßnahme hat den Vorteil, dass das Kunststoffrohr besonders flexibel und dehnfähig bei der Verlegung ist. Insbesondere lässt sich das Kunststoffrohr auch besonders kostengünstig herstellen.

Erfindungsgemäß weist das Rohr eine klebfähige Innenschicht auf , die ein klebfähiges Material enthält. Diese Maßnahme hat den Vorteil, dass das klebfähige Material nur in einer dünnen Schicht an der Rohrinnenseite, nicht aber über die gesamte Wanddicke, vorliegt. Gegenüber einem Kunststoffrohr, dessen Rohrwand vollständig aus einem klebfähigen Material besteht, z.B. einem PVC-Rohr, ist das Kunststoffrohr gemäß dieser bevorzugten Ausführung aufgrund der geringeren Materialkosten wesentlich kostengünstiger herstellbar und bei der Einbringung durch einen Kanalschacht in ein Abwassersystem aufgrund der besseren Dehnfähigkeit und Flexibilität wesentlich leichter zu handhaben.

Erfindungsgemäß ist die klebfähige Innenschicht an einer Innenseite einer Tragschicht koextrudiert. Diese Maßnahme hat den Vorteil, dass sich ein derartiges Kunststoffrohr in einem kontinuierlichen Verfahren herstellen lässt, was besonders wirtschaftlich ist, und dass die Tragschicht und die Innenschicht besonders fest verbunden sind.

Die Innenschicht kann dabei insbesondere aus klebefähigem Material, das zusätzlich polare Materialien, wie beispielsweise siliziumhaltige Stoffe oder Talkum enthält, die zu einer Erhöhung der Klebeneigung des Schichtmaterials beitragen, bestehen.

Die Polarität der Innenschicht kann insbesondere auch durch eine Oberflächenbehandlung, wie zum Beispiel durch Beflammen, erhöht sein.

Eine weitere bevorzugte Ausführung der Erfindung betrifft ein Kunststoffrohr nach einer der vorangegangenen Ausführungen, wobei die Innenschicht als Haftvermittterschicht ausgebildet ist. Diese Maßnahme hat den Vorteil, dass der Haftvermittler gut verarbeitbar ist, und dass mit dieser Ausführung besonders hohe Abreißfestigkeiten bei der Klebeverbindung derartiger Kunststoffrohre mit Formteilen über die jeweiligen Rohrinnenseiten erzielbar sind.

Die Innenschicht kann auch als Haftvermittlerschicht ausgeführt sein, bei der die Klebefähigkeit erst bei Temperaturen von minimal 60 °C gegeben ist.

Erfindungsgemäß ist die Innenschicht chemisch mit Carbonsäureestern modifiziert und zwar mit Ethylen-Vinylacetat, das preisgünstig und gut verarbeitbar ist.

Der Vinylacetat-Anteil beträgt 14 bis 40 %. Dies hat positive Auswirkungen auf die Haftfestigkeit, die Verarbeitbarkeit und vermeidet unkontrolliertes Verkleben.

Eine weitere bevorzugte Ausführung der Erfindung betrifft ein Kunststoffrohr nach einer der vorangegangenen Ausführungen, wobei die Festigkeit bei Streckgrenze der klebfähige Innenschicht zumindest 5 N/mm² erreicht. Diese Maßnahme hat den Vorteil, dass das Kunststoffrohr in besonders hohem Maße belastbar ist und insbesondere auch zum (Ab-)Transport von Feststoffen wie Sand oder Kies einsetzbar ist.

Eine weitere bevorzugte Ausführung der Erfindung betrifft ein Kunststoffrohr nach einer der vorangegangenen Ausführungen, wobei die klebfähige Innenschicht eine Stärke von weniger als 50 % der Rohrwanddicke, vorzugsweise zwischen 0,2 mm bis 2,0 mm, bevorzugt 1,0 mm aufweist. Diese Maßnahme hat den Vorteil, dass in diesem Wandstärkebereich ein optimales Verhältnis zwischen Klebfähigkeit und Dehnfähigkeit der Innenschicht vorliegt. Beispielsweise bei einer Faltung des Kunststoffrohres wird die Innenschicht an der Innenfalte in hohem Maße gedehnt, wobei die Wanddicke der Innenschicht signifikant reduziert wird. Die Innenschicht besitzt bei dem Kunststoffrohr gemäß dieser Ausführung ein besonders hohes Rückstellungsvermögen, so dass die Ausgangswanddicke nach der Rückformung problemlos wieder erreicht wird.

Eine weitere bevorzugte Ausführung der Erfindung betrifft ein Kunststoffrohr nach einer der vorangegangenen Ausführungen, wobei eine maximale Dehnfähigkeit der Innenschicht im Wesentlichen der Dehnfähigkeit der Tragschicht entspricht. Diese Maßnahme hat den Vorteil, dass die Innenschicht und die Tragschicht zumindest in ähnlichem Maße verformbar sind, so dass die Gefahr von Rohrschäden an der Grenzfläche zwischen Innenschicht und Tragschicht erheblich verringert ist.

Eine weitere bevorzugte Ausführung der Erfindung betrifft ein Kunststoffrohr nach einer der vorangegangenen Ausführungen, wobei das Rohr derart behandelt ist, dass sich die Klebeabschnitte über die gesamte Rohrinnenseite erstrecken. Diese Maßnahme hat den Vorteil, dass keine Positionsvorgaben bei der Rohrverlegung im Hinblick auf die Anbindung von Zweigleitungen einzuhalten sind, so dass Abzweigungen aus dem Kunststoffrohr an jeder Stelle des Kunststoffrohrs möglich sind.

Eine weitere bevorzugte Ausführung der Erfindung betrifft ein Kunststoffrohr nach einer der vorangegangenen Ausführungen, wobei das Rohr derart behandelt ist, dass eine Abreißfestigkeit einer Klebeverbindung an der Rohrinnenseite unter Verwendung eines Epoxid-/Polyester-/Acrylat- oder Polyurethanklebstoffs mindestens 1 N/mm² beträgt. Diese Maßnahme hat den Vorteil, dass die Klebeverbindung die Anforderungen für ausreichend zugfeste Anbindungen und Dichtheit (über-)erfüllt.

Eine weitere bevorzugte Ausführung der Erfindung betrifft das Aufbringen einer weiteren Schicht auf die Innenschicht des Kunststoffrohres nach einer der vorangegangenen Ausführungen zur Verbesserung oder Modifizierung der funktionalen Eigenschaften, so z.B. der elektrische Leitfähigkeit, der Haftfestigkeit oder der Chemikalienbeständigkeit.

Bei einer weiteren bevorzugten Ausführung der Erfindung kann das Aufbringen der Innenschicht auf das Kunststoffrohr nach einer der vorangegangenen Ausführungen bei oder nach der Verlegung als Rohrleitung bewerkstelligt werden, was den Vorteil bietet, dass die Innenschicht nicht den Einflüssen aus Rohrfertigung, -lagerung und -verlegung unterliegt.

Kurze Beschreibung der Zeichnungen
- Fig. 1: zeigt eine Querschnittsansicht des erfindungsgemäßen Kunststoffrohres im verformten Zustand im inneren einer zu sanierenden Abwasserleitung.
- Fig. 2: zeigt eine Querschnittsansicht des erfindungsgemäßen Kunststoffrohrs im Inneren einer zu sanierenden Abwasserleitung, wobei das Kunststoffrohr an der Innenwand der Abwasserleitung anliegt.
- Fig. 3a: zeigt eine vergrößerte Ansicht III aus Fig. 2, zur Erläuterung eines Kunststoffrohres, das nicht zur Erfindung gehört.
- Fig. 3b: zeigt eine vergrößerte Ansicht III aus Fig. 2, zur Erläuterung eines Ausführungsbeispiels gemäß der Erfindung.

### Detaillierte Beschreibung der bevorzugten Ausführungsbeispiele

Die Erfindung betrifft ein Kunststoffrohr 1 zur Sanierung von Abwasserleitungen 2, wobei das Rohr 1 querschnittsreduzierend verformbar ist, um in eine zu sanierende Abwasserleitung 2 eingebracht zu werden, und anschließend rückverformbar ist, um sich von innen gegen die zu sanierende Abwasserleitung 2 zu legen. Dabei ist das Rohr 1 derart behandelt, dass es an einer Rohrinnenseite 12, 14 im behandelten Zustand eine höhere Klebfähigkeit aufweist als in einem unbehandelten Zustand, und weist an der Rohrinnenseite 12, 14 Klebeabschnitte auf, die von radial benachbarten Abschnitten des Rohres 1 chemisch verschieden sind.

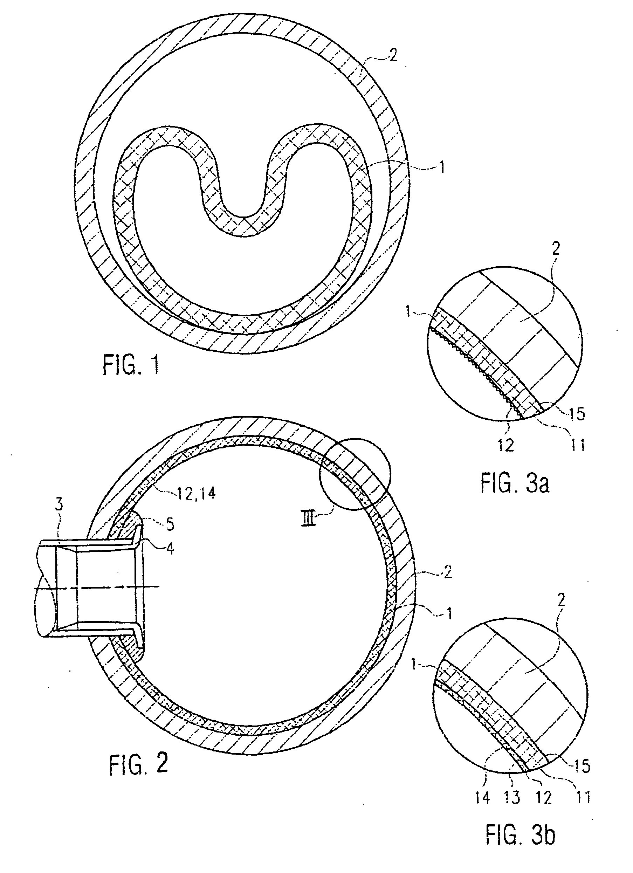

Fig. 1 zeigt das erfindungsgemäße Kunststoffrohr in einer zu sanierenden Abwasserleitung 2 im querschnittsreduzierten Verrormungszustand. Fig. 2 zeigt das erfindungsgemäße Kunststoffrohr 1 im rückverformen Zustand.

Das erfindungsgemäße Kunststoffrohr 1 ist als Polyethylenrohr ausgebildet oder besteht zu wesentlichen Teilen aus Polyethylen. Das dargestellte Kunststoffrohr 1 umfasst eine Tragschicht 11, die vorzugsweise vollständig aus Polyethylen besteht. Die Innenseite der Tragschicht 11 ist mit Bezugszeichen 12 bezeichnet.

Ein nicht zur Erfindung gehörendes Kunststoffrohr wird nachstehend mit Bezug auf Fig. 3a erläutert. Fig. 3a zeigt eine vergrößerte Ansicht III aus Fig. 2.

In Fig. 3a befindet sich das Kunststoffrohr 1 im rückverformten Zustand mit kreisrundem Querschnitt in der zu sanierenden Abwasserleitung 2. Eine Außenseite 15 des Kunststoffrohres 1 liegt an einer Innenseite der Abwasserleitung 2 unmittelbar an. Die Tragschicht 11 besteht aus einem PE 80/100 Basisrohr und weist an der Rohrinnenseite 12 Klebeabschnitte auf, die von radial benachbarten Abschnitten des Rohres 1 chemisch verschieden sind. Insbesondere weist das Kunststoffrohr 1 an der Rohrinnenseite 12 eine höhere Klebfähigkeit auf als an der Rohraußenseite 15. Das Kunststoffrohr 1 ist an der Rohrinnenseite 12 durch Beaufschlagung mit einem Fluorgas, insbesondere durch Beaufschlagung mit einem Fluorsauerstoffgemisch chemisch modifiziert.

Bei der chemischen Modifizierung durch Gasfluorierung werden gefaltete Rohre als Endlosware auf Rohrtrommeln oder Bunde gewickelt, an den Enden verschlossen und mit dem Fluorsauerstoffgemisch im Rohrinneren durchströmt. Das Fluorsauerstoffgemisch dringt ca. 5 µm von der Rohrinnenseite 12 in die Rohrwand bzw. Tragschicht 11 ein, fortschreitend bis die gesamte Rohrinnenseite 12 vollumfänglich über die gesamte Länge des Kunststoffrohres 1 fluoriert ist. Dadurch weist das Kunststoffrohr 1 an der Rohrinnenseite 12 vollumfänglich über die gesamte Rohrlänge eine gegenüber dem unbehandelten Zustand erhöhte Klebefähigkeit auf bzw weist an der Rohrinnenseite 12 vollumfänglich über die gesamte Rohrlänge Klebeabschnitte auf, die von radial benachbarten Abschnitten des Rohres 1 chemisch verschieden sind.

Ein Ausführungsbeispiel des erfindungsgemäßen Kunststoffrohres 1 wird nachstehend mit Bezug auf Fig. 3b erläutert. Fig. 3b zeigt eine vergrößerte Ansicht III aus Fig. 2.

Im Ausführungsbeispiel weist das Kunststoffrohr 1 ein klebfähiges Material als Innenschicht 13 auf. Die Innenseite der Innenschicht 13 ist mit Bezugszeichen 14 bezeichnet. Die Innenschicht 13 ist ein klebfähiges Koextrudat, das an der Innenseite 12 der Tragschicht 11 aufextrudiert bzw. koextrudiert ist. Die Tragschicht 11 besteht aus einem PE 80/100 Basisrohr, wobei es sich um ein bimodales Material handelt. Das k!ebfähige Material für die Innenschicht 13 ist vorzugsweise ein handelsübliches Ethylen-Vinylacetat. Demnach weist das Rohr 1 an der Rohrinnenseite 12 vollumfänglich über die gesamte Rohrlänge Klebeabschnitte auf, die von radial benachbarten Abschnitten des Rohres 1 chemisch verschieden sind. Ethylen-Vinylacetat ist ein Copolymer auf der Basis von Ethylen und Vinylacetat. Durch die Pfropfung mit Vinylacetat wird das unpolare Polyethylen polarer. Die Polarität steigt dabei mit zunehmendem Gehalt an Vinylacetat. Der Anteil Vinylacetat im klebfähigen Material kann beispielsweise ca. 40% betragen. Das Ethylen der Innenschicht 13 stellt die Verbindung zur Tragschicht 11 her. Das gepfropfte Vinylacetat stellt die Verbindung zu einem Klebstoffsystem 5 her. Das Ethylen-Vinylacetat ist auf dem PE 80/100 Basisrohr der Tragschicht 11 gut extrudierbar und weist eine Abreißfestigkeit von mindestens 1 N/mm² auf. Auch andere klebfähige Materialien können verwendet werden.

Das klebfähige Material wird als Innenschicht 13 von ca 1,0 mm Wandstärke an der Innenseite 12 der Tragschicht 11 vor der Querschnittsreduzierung bzw. Faltung koextrudiert, so dass eine feste stoffschlüssige Schweißverbindung der Innenschicht 13 mit der Tragschicht 11 erreicht wird. Das Material der Innenschicht 13 ist so mit Ethylen-Vinylacetat modifiziert, dass es eine Festigkeit bei Streckgrenze von mindestens 5 N/mm² erreicht. Damit ist das Kunststoffrohr 1 in Abwasserleitungen einsetzbar, in denen neben häuslichem Abwasser auch Feststoffe wie Sande und Kiese transportiert werden.

Das Kunststoffrohr 1 wird gefaltet und auf Trommel oder als Bund gewickelt. Beim Einziehen des Kunststoffrohrs 1 in die zu sanierende Abwasserleitung 2 kommt es auf die Dehnfähigkeit des Rohrmaterials an Die maximale Dehnfähigkeit des Materials der Innenschicht 13 ist vergleichbar zu der des Materials der Tragschicht 11 und erreicht mindestens 10 % bei +20 °C und einer Prüfdauer von 1 h im Zeitstandzugversuch. Damit sind Risse im Rohrmaterial beim Einziehen ausgeschlossen. Die Innenschicht 13 ist sowohl vor der querschnittsreduzierenden Verformung als auch nach der Rückformung (Fig. 2) gleichmäßig am Rohrinnenumfang bzw. an der Innenseite 12 der Tragschicht 11 verteilt. Bei der Faltung (Fig. 1) wird die Innenschicht 13 an der Innenfalte in hohem Maße gedehnt, wobei die Wanddicke der Innenschicht 13 bis zu. 30 % der Ausgangswanddicke reduziert wird.

Die Innenschicht 13 besitzt ein hohes Rückstellungsvermögen, so dass die innenschicht 13 nach der Rückformung wieder die Ausgangswandstärke erreicht.

Die bestimmungsgemäße Weiterverarbeitung des erfindungsgemäßen Kunststoffrohres 1 wird mit Bezug auf Fig. 2 beschrieben.

Nach der Rückformung des Kunststoffrohres 1 in der zu sanierenden Abwasserleitung 2 wird das Kunststoffrohr 1 im Hausanschlussbereich durch Robotertechnik an der Innenseite 12, 14 geöffnet und z. B. unter Verwendung eines Hutprofiles 4 und eines Expoxid-/Polyester-/Acrylat- oder Polyurethanklebers 5 durch Klebung abgedichtet. Die Verklebung erfolgt dabei zwischen der ringförmigen, breiten Krempenfläche des Hutprofils 4 im Rohr und den Klebeabschnitten bzw. der klebfähigen Innenseite 12 (Variante 1; Fig. 3a) bzw. der Innenseite 14 der Innenschicht 13 (Variante 2; Fig. 3b). Die Verklebung erreicht eine Abreißfestigkeit von mindestens 1 N/mm², die als ausreichend für eine feste Anbindung der Abzweigungsleitung 3 bzw. des Hausanschlusses 3 anzunehmen ist. Die Verklebung behält die Klebefestigkeit auf Dauer bei, da sich die Eigenschaften von Rohrinnenschicht 13, Hutprofil 4 und Klebstoff 5 nicht wesentlich ändern.

## Patentansprüche

1. Kunststoffrohr (1) zur Sanierung von Abwasserleitungen (2), wobei das Rohr (1) querschnittreduzierend verformbar ist, um in eine zu sanierende Abwasserleitung (2) eingebracht zu werden, und anschließend rückverformbar ist, um sich von innen gegen die zu sanierende Abwasserleitung (2) zu legen, wobei das Rohr (1) an einer Rohrinnenseite (12, 14) Klebeabschnitte aufweist, die von radial benachbarten Abschnitten des Rohres (1) chemisch verschieden sind und das Rohr (1) als Polyolefinrohr ausgebildet ist und das Rohr (1) eine klebfähige Innenschicht (13) aufweist, wobei die klebfähige Innenschicht (13) an einer Innenseite (12) einer aus dem Polyolefinrohr bestehenden Tragschicht (11) koextrudiert ist und die Innenschicht (13) mit Ethylen-Vinylacetat als Carbonsäureester modifiziert ist, **dadurch gekennzeichnet, dass** der Vnylacetat-Anteil 14 bis 40% in der Innenschicht (13) beträgt.

2. Kunststoffrohr (1) nach Anspruch 1, wobei das Polyolefinrohr als Polyethylenrohr ausgebildet ist oder zumindest an seiner Innenseite im Wesentlichen aus Polyethylen besteht.

3. Kunststoffrohr (1) nach Anspruch 1, wobei die klebfähige Innenschicht (13) zusätzlich polares Material enthält und/oder deren Polarität durch Oberflächenbehandlung erhöht ist.

4. Kunststoffrohr (1) nach einem der Ansprüche 1 oder 3, wobei die Innenschicht (13) als Haftvermittlerschicht ausgebildet ist.

5. Kunststoffrohr (1) nach Anspruch 1 oder 3, wobei die Innenschicht (13) durch Pfropfung von Polyethylen mit Vinylacetat modifiziert ist.

6. Kunststoffrohr (1) nach einem der Ansprüche 1 bis 5, wobei die Festigkeit bei Streckgrenze der klebfähigen Innenschicht (13) zumindest 5 N/mm² erreicht.

7. Kunststoffrohr (1) nach Anspruch 6, wobei die klebfähige Innenschicht (13) eine Stärke von weniger als 50% der Rohrwanddicke aufweist oder die klebfähige Innenschicht (13) eine Stärke zwischen 0,2 mm bis 2,0 mm oder eine Stärke von 1,0 mm aufweist.

## Claims

1. Plastics pipe (1) for renovating drainage pipes (2), where the pipe (1) can be deformed with reduction of cross section in order to be introduced into a drainage pipe (2) requiring renovation, and can then undergo reverse deformation in order to make internal contact with the drainage pipe (2) requiring renovation, where an internal side (12, 14) of the pipe (1) has adhesion sections which differ chemically from radially adjacent sections of the pipe (1), and the pipe (1) is a polyolefin pipe, and the pipe (1) has an adhesion-permitting inner layer (13), where the adhesion-permitting inner layer (13) has been coextruded on an inner side (12) of a supportive layer (11) composed of the polyolefin pipe, and the inner layer (13) has been modified with ethylene-vinyl acetate as carboxylic ester, **characterized in that** the proportion of vinyl acetate in the inner layer (13) is from 14 to 40 %.

2. Plastics pipe (1) according to Claim 1, where the polyolefin pipe is a polyethylene pipe or at least the inner side thereof consists essentially of polyethylene.

3. Plastics pipe (1) according to Claim 1, where the adhesion-permitting inner layer (13) also comprises polar material and/or the polarity of that layer has been increased via surface treatment.

4. Plastics pipe (1) according to Claim 1 or 3, where the inner layer (13) is an adhesion-promoter layer.

5. Plastics pipe (1) according to Claim 1 or 3, where the inner layer (13) has been modified via grafting of polyethylene with vinyl acetate.

6. Plastics pipe (1) according to any of Claims 1 to 5, where the strength of the adhesion-permitting inner layer (13) at the yield point is at least 5 N/mm².

7. Plastics pipe (1) according to Claim 6, where the thickness of the adhesion-permitting inner layer (13) is less than 50 % of the pipe wall thickness, or the thickness of the adhesion-permitting inner layer (13) is from 0.2 mm to 2.0 mm or is 1.0 mm.

## Revendications

1. Tuyau en matériau synthétique (1) destiné à l'assainissement de conduites pour eaux usées (2), où le tuyau (1) est déformable avec réduction de la section, pour être introduit dans une conduite pour eaux usées (2) à assainir et ensuite déformable en retour, pour se placer à l'intérieur contre la conduite pour eaux usées (2) à assainir, où le tuyau (1) présente, sur une face intérieure (12, 14) du tuyau des sections adhésives qui sont chimiquement différentes des sections radialement adjacentes du tuyau (1) et le tuyau (1) est réalisé sous forme de tuyau en polyoléfine et le tuyau (1) présente une couche intérieure poisseuse (13), la couche intérieure poisseuse (13) étant coextrudée sur une face (12) intérieure d'une couche support (11) formée par le tuyau en polyoléfine et la couche intérieure (13) étant modifiée avec de l'éthylène-acétate de vinyle comme ester d'acide carboxylique, **caractérisé en ce que** la proportion d'acétate de vinyle représente 14 à 40 % dans la couche intérieure (13).

2. Tuyau en matériau synthétique (1) selon la revendication 1, où le tuyau en polyoléfine est réalisé sous forme de tuyau en polyéthylène ou est constitué au moins sur sa face intérieure essentiellement par du polyéthylène.

3. Tuyau en matériau synthétique (1) selon la revendication 1, où la couche intérieure poisseuse (13) contient en outre du matériau polaire et/ou présente une polarité augmentée par un traitement de surface.

4. Tuyau en matériau synthétique (1) selon l'une quelconque des revendications 1 ou 3, où la couche intérieure (13) est réalisée sous forme de couche de promoteur d'adhérence.

5. Tuyau en matériau synthétique (1) selon la revendication 1 ou 3, où la couche intérieure (13) est modifiée par greffage de polyéthylène avec de l'acétate de vinyle.

6. Tuyau en matériau synthétique (1) selon l'une quelconque des revendications 1 à 5, où la résistance à la limite d'étirement de la couche intérieure poisseuse (13) atteint au moins 5 N/mm².

7. Tuyau en matériau synthétique (1) selon la revendication 6, où la couche intérieure poisseuse (13) présente une épaisseur inférieure à 50 % de l'épaisseur de la paroi du tuyau ou la couche intérieure poisseuse (13) présente une épaisseur entre 0,2 mm et 2,0 mm ou une épaisseur de 1,0 mm.
